# EUROPEAN PATENT SPECIFICATION

(11) **EP 3 582 245 B1**
(45) Date of publication and mention of the grant of the patent: **16.06.2021**
(21) Application number: 17896152.0
(22) Date of filing: 14.12.2017
(51) Int. Cl.: H01H 47/00, H01H 9/54, H01H 37/76, H01H 85/38, H01H 85/46, H02H 3/087, H01H 33/59

(54) **ARC-SUPPRESSING DEVICE**
VORRICHTUNG ZUR LICHTBOGENUNTERDRÜCKUNG
DISPOSITIF DE SUPPRESSION D'ARC

(30) Priority: 13.02.2017 JP 2017024113
(43) Date of publication of application: 18.12.2019
(73) Proprietor: Sony Corporation, Tokyo 108-0075 (JP)
(72) Inventor: MORITA, Tadashi, Tokyo 141-0022 (JP)
(74) Representative: 2SPL Patentanwälte PartG mbB
(86) International application number: PCT/JP2017/044947
(87) International publication number: WO 2018/146942

(56) References cited:
- WO-A1-2015/002187
- WO-A1-2016/194584
- JP-A- 2015 115 173
- US-A- 4 658 320
- US-A- 5 536 980

## Description

### TECHNICAL FIELD

The present disclosure relates to an arc suppression device.

### BACKGROUND ART

An arc discharge is generated when electric power is interrupted in both of DC power feeding and AC power feeding. Since there is a moment at which voltage becomes zero in every predetermined period (such as every 10 millisecond), the arc discharge is naturally stopped at least in the predetermined period (in 10 milliseconds, for example) in a case of AC. However, since there is no moment of zero voltage, the arc discharge is not stopped naturally in the DC power feeding.

Therefore, a technology to suppress generation of an arc discharge in interruption of electric power in a case of DC power feeding has been disclosed (see Patent Document 1, 2, or the like).

### CITATION LIST

### PATENT DOCUMENT

Patent Document 1: Japanese Patent Application Laid-Open No. 2003-203721
Patent Document 2: JP 2014-522088 A
Patent Document 3: US 5,536,980 discloses a high current DC switch having a single pole, double throw relay and a solid state power switch such as an IGBT or MOSFET transistor.

### SUMMARY OF THE INVENTION

### PROBLEMS TO BE SOLVED BY THE INVENTION

In a case where a fuse is provided and redundancy is given in consideration of a case where a circuit to suppress generation of an arc in interruption of electric power is broken, it is necessary to consider that fusion is not performed in normal time even in a case where high current flows from a power supply. However, by utilization of a fuse that is not fused unless current equal to or higher than a condition in which arc is generated flows, there is a case where the fuse is not fused and arc is generated if a circuit to suppress generation of the arc in interruption of electric power is broken.

Thus, in the present disclosure, a new and enhanced arc suppression device capable of suppressing generation of arc even when high current is interrupted is proposed.

### SOLUTIONS TO PROBLEMS

According to the present disclosure, there is provided an arc suppression device including: a current limiting circuit provided in parallel with a breaker that switches supplying and interrupting of electric power from a power supply to a load; a first protector that is provided before or after the current limiting circuit and that interrupts current from the power supply if current of a predetermined amount or more flows in the current limiting circuit for a predetermined period or longer; and a second protector that interrupts the current from the power supply after the first protector interrupts the current from the power supply, in which the current limiting circuit interrupts its current from the power supply when the electric power from the power supply is supplied to the load, and interrupts its current from the power supply after the current of the predetermined amount or more generated by a potential difference generated in interruption flows for a period shorter than the predetermined period when the supply of the electric power from the power supply to the load is interrupted.

Also, according to the present disclosure, a mobile object including one or more arc suppression devices described above is provided.

Also, according to the present disclosure, there is provided a power supply system including: a battery that supplies DC power; a driving unit that performs driving with the DC power supplied by the battery; and the at least one arc suppression device provided between the battery and the driving unit.

### EFFECTS OF THE INVENTION

As described above, a new and enhanced arc suppression device capable of suppressing generation of arc even when high current is interrupted can be provided according to the present disclosure.

Note that the above effect is not necessarily a limitation. Along with the above effect or instead of the above effect, any effect disclosed in the present description or a different effect that may be grasped from the present description may be acquired.

### BRIEF DESCRIPTION OF DRAWINGS

Fig. 1 is a view for describing a configuration example of an arc suppression device to suppress generation of arc when electric power is interrupted.
Fig. 2 is a view for describing an example of a fusion characteristic curve of a fuse.
Fig. 3 is a view for describing a circuit configuration example of an arc suppression device according to an embodiment of the present disclosure.
Fig. 4 is a view schematically illustrating a state in which an MOSFET M1 becomes resistance due to a breakdown of the MOSFET M1.
Fig. 5 is a view for describing, with a timing chart, an operation example of the arc suppression device according to the present embodiment illustrated in Fig. 3.
Fig. 6 is a view for describing a modification example of the arc suppression device according to the embodiment of the present disclosure.
Fig. 7 is a view for describing a temporal transition of voltage and current in the arc suppression device illustrated in Fig. 6.
Fig. 8 is a view for describing a functional configuration example of a mobile object 40 including an arc suppression device.

### MODE FOR CARRYING OUT THE INVENTION

In the following, a preferred embodiment of the present disclosure will be described in detail with reference to the attached drawings. Note that in the present description and drawings, an overlapped description is omitted by assignment of the same sign with respect to configuration elements practically having the same functional configuration.

Note that the description will be made in the following order.
1. Embodiment of the present disclosure
   1.1. Background
   1.2. Configuration example
2. Conclusion

### <1. Embodiment of the present disclosure>

### [1.1. Background]

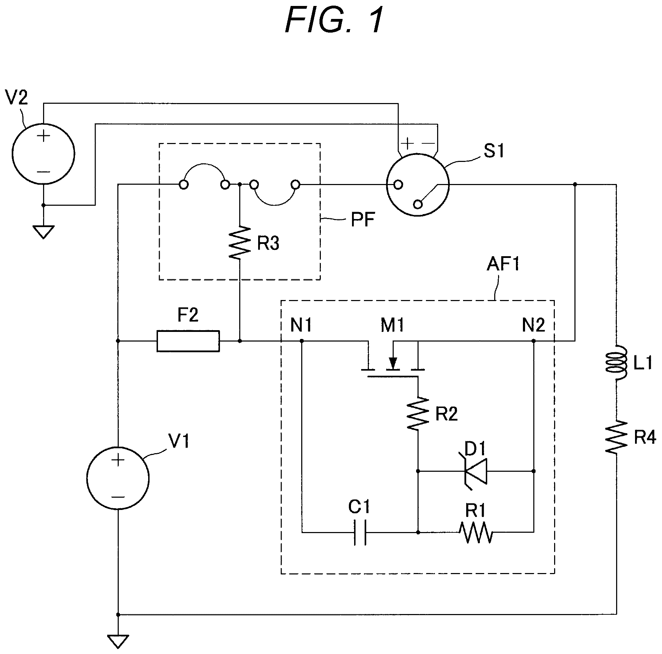

First, a background of an embodiment of the present disclosure will be described with reference to Fig. 1.

An arc discharge is generated when electric power is interrupted in both of DC power feeding and AC power feeding. Since there is a moment at which voltage becomes zero in every predetermined period (such as every 10 millisecond), the arc discharge is naturally stopped at least in the predetermined period (in 10 milliseconds, for example) in a case of AC. However, since there is no moment of zero voltage, the arc discharge is not stopped naturally in the DC power feeding. Therefore, many technologies to suppress generation of arc in electric power interruption in the DC power feeding are disclosed.

A technology of providing a fuse and giving redundancy in consideration of a case where a circuit to suppress generation of arc in interruption of electric power is broken is also considered. When a fuse is provided and redundancy is given, it is necessary to consider that fusion is not performed in normal time even in a case where high current flows from the power supply. However, by utilization of a fuse that is not fused unless current equal to or higher than a condition in which arc is generated flows, there is a case where the fuse is not fused and arc is generated if a circuit to suppress generation of the arc in interruption of electric power is broken.

Thus, in view of the forgoing contents, this discloser has made earnest consideration of a technology to suppress generation of arc in a breakdown of a circuit in a case where the circuit to suppress generation of arc in interruption of electric power during which relatively high current flows, and a fuse to give redundancy in a breakdown of the circuit are provided. As a result, this discloser has invented a technology of suppressing generation of arc by not performing fusion during supply of electric power from a power supply during which relatively high current flows and by bypassing the current to a fuse in a case of a breakdown of a circuit, as described in the following.

In the above, a background of an embodiment of the present disclosure has been described.

### [1.2. Configuration example]

Next, an embodiment of the present disclosure will be described with reference to the drawings. First, a comparison example will be presented and described for better understanding of the embodiment of the present disclosure.

Fig. 1 is a view for describing a configuration example of an arc suppression device to suppress generation of arc when electric power is interrupted. The arc suppression device illustrated in Fig. 1 includes a switch S1 including, for example, a solid state relay (SSR), a current limiting circuit AF1, a fuse F1, and a protector PF.

The switch S1 is configured in such a manner as to be switched on/off by electric power from a DC power supply V2. In a case where the switch S1 is on, electric power from a power supply V1 that supplies DC power is supplied to resistance R4. In a case where the switch S1 is off, supply of the electric power from the power supply V1 to the resistance R4 is interrupted.

The current limiting circuit AF1 includes a metal-oxide-semiconductor field-effect transistor (MOSFET) M1, a Zener diode D1, a diode D2, resistance R1 and R2, and a capacitor C1. The current limiting circuit AF1 is a circuit to suppress generation of arc in the switch S1 when the switch S1 interrupts current in a state in which electric power is supplied from the power supply V1.

Each element included in the current limiting circuit AF1 will be described. The MOSFET M1 is an n-type MOSFET in the present embodiment. The MOSFET M1 is provided in a path in which current from the power supply V1 flows. The capacitor C1 is provided between a drain terminal and a gate terminal of the MOSFET M1. Also, the resistance R1 is provided between the gate terminal and a source terminal of the MOSFET M1. The resistance R1 is provided to set, along with the capacitor C1, time of applying voltage to the gate terminal of the MOSFET M1. Here, the capacitor C1 and the resistance R1 are provided in series. The Zener diode D1 is provided to discharge a charge stored in the capacitor C1 when a contact of the switch S1 is connected. Also, the Zener diode D1 is provided to protect the gate terminal of the MOSFET M1. The diode D2 suppresses current by a parasitic reverse diode of the MOSFET M2.

Next, a function of the current limiting circuit AF1 will be described. When the switch S1 is in an on-state, the MOSFET M1 is in an off-state. Thus, current does not flow in an arc suppression device 100.

If current is interrupted by the switch S1, a predetermined potential difference is generated between terminals of the switch S1. This potential difference corresponds to a voltage value of the power supply V1 in interruption. The potential difference generated between the terminals of the switch S1 induces a gate voltage of the MOSFET M1 through the capacitor C1, and brings the MOSFET M1 into the on-state. If the MOSFET M1 becomes the on-state, current flows in a direction of decreasing the potential difference between the terminals of the switch S1. That is, if the MOSFET M1 becomes the on-state, current flows in a direction of a node N5 from a node N1.

If the MOSFET M1 becomes the on-state, current flows in a direction of decreasing the potential difference between the terminals of the switch S1. Thus, the potential difference between the terminals of the switch S1 is decreased. Thus, even in a case where a generation condition of arc is satisfied when current is interrupted by the switch S1 in a state in which electric power is supplied from the power supply V1, the arc is not generated in the switch S1.

Voltage between the drain terminal and the source terminal of the MOSFET M1 falls within voltage along a transfer function by a gate voltage of a FET. If charging of the capacitor C1 progresses by the potential difference generated between the terminals of the switch S1, the gate voltage of the MOSFET M1 is decreased. If the gate voltage of the MOSFET M1 is decreased, the MOSFET M1 transitions to the off-state eventually. By the transitions of the MOSFET M1 into the off-state, current no longer flows into the MOSFET M1.

The protector PF is provided to bypass the current flowing from the power supply V1 to the current limiting circuit AF1 when the MOSFET M1 is broken (that is, in a case where MOSFET M1 does not function as a switching element and becomes just resistance) and includes two fuses and resistance R3 provided between the two fuses. In other words, the protector PF has three terminals. The resistance R3 has a role of forcibly fusing the fuses inside the protector PF. As illustrated in Fig. 1, the fuse F1 is provided between the power supply V1 and the current limiting circuit AF1.

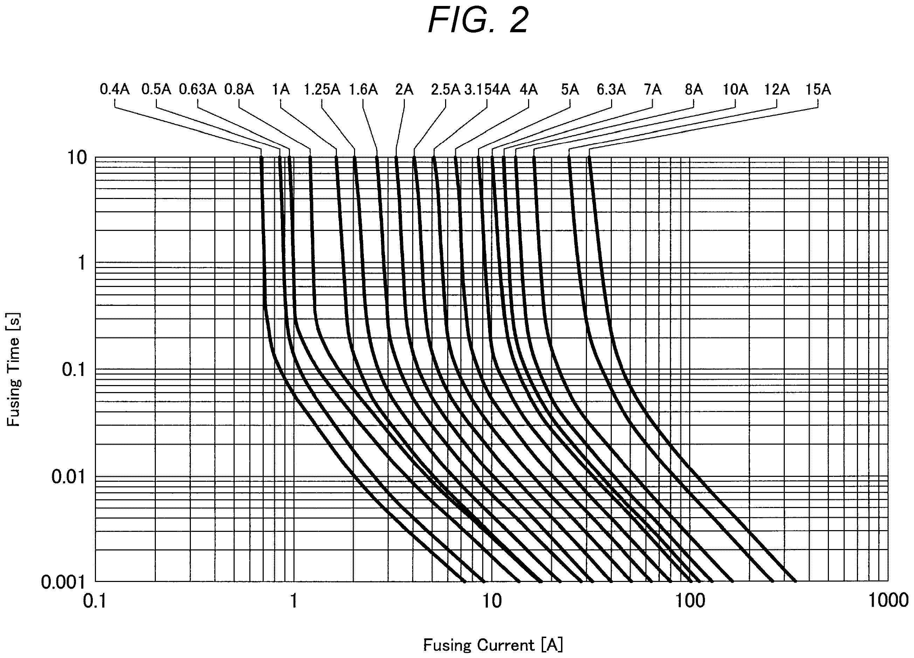

Fig. 2 is a view for describing an example of a fusion characteristic curve of a fuse. According to the fusing characteristic illustrated in Fig. 2, in a case where current of 10 amperes flows from the power supply V1, what is not fused even if the current of 10 amperes (A) flows for about three milliseconds and is not fused even if current of one ampere continuously flows only needs to be used as the fuse F1.

Thus, even if the MOSFET M1 is broken and does not function as a switching element, the fuse F1 is fused if the switch S1 is turned off and the fuses of the protector PF are subsequently fused in a state in which current of one ampere or higher flows in the resistance R4. Also, in a state in which current lower than one ampere flows in the resistance R4, arc is not kept even if the switch S1 is turned off.

However, for example, in a case where current of 40 amperes flows from the power supply V1, it is necessary to use, as the fuse F1, what is not fused even if the current of 40 amperes (A) flows for about three milliseconds. According to the fusion characteristic curve of a fuse which curve is illustrated in Fig. 2, rating of a fuse that is not fused even if the current of 40 amperes (A) flows for about three milliseconds is four amperes. If the switch S1 is turned off in a state in which the MOSFET M1 is broken, there is a possibility that arc is generated at a contact of the switch S1.

Thus, a configuration of suppressing generation of arc at a contact of the switch S1 in turning off of the switch S1 even in a case where the MOSFET provided in the current limiting circuit AF1 is broken in a state in which high current such as the current of 40 amperes or higher flows from the power supply V1 will be described.

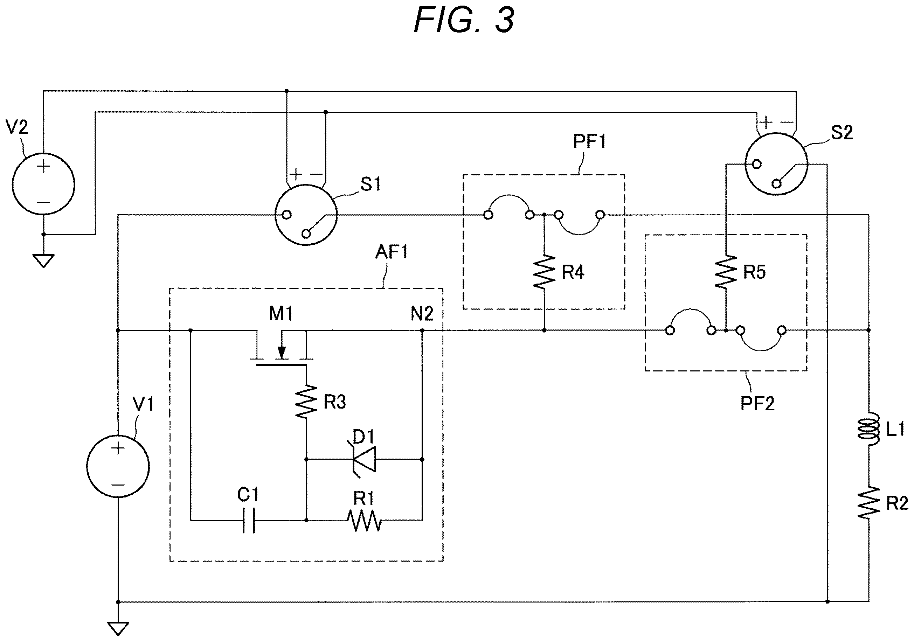

Fig. 3 is a view for describing a circuit configuration example of an arc suppression device according to an embodiment of the present disclosure. In the following, a circuit configuration example of the arc suppression device according to the embodiment of the present disclosure will be described with reference to Fig. 3.

The arc suppression device according to the embodiment of the present disclosure which device is illustrated in Fig. 3 includes switches S1 and S2 including, for example, SSRs, a current limiting circuit AF1, and protectors PF1 and PF2. Since a configuration and a function of the current limiting circuit AF1 are identical to those illustrated in Fig. 1, a detailed description thereof is omitted. Also, the power supply V1 illustrated in Fig. 3 is configured to supply electric power of 400 W. If the resistance R2 is 10 ohms (Ω), current of 40 amperes flows from the power supply V1.

The switches S1 and S2 are configured in such a manner as to be switched on/off by electric power from a DC power supply V2. The switch S1 is a make contact and the switch S2 is a break contact. In a case where the switch S1 is on, electric power from the power supply V1 that supplies DC power is supplied to resistance R2. In a case where the switch S1 is off, supply of the electric power from the power supply V1 to the resistance R2 is interrupted. The switch S2 is off in a case where the switch S1 is on, and is on in a case where the switch S1 is off.

The protectors PF1 and PF2 are provided to bypass current flowing from the power supply V1 to the current limiting circuit AF1 when a MOSFET M1 is broken, and include two fuses each and respectively include resistance R4 and R5 provided between the two fuses. In other words, in a state in which the MOSFET M1 is not broken, current flowing in the protectors PF1 and PF2 is limited by the MOSFET M1. Each of the protectors PF1 and PF2 includes three terminals. For example, it is assumed that rating of the fuses of the protector PF2 is five amperes. Also, the resistance R5 of the protector PF2 is connected to a negative electrode of the switch S2. Here, it is assumed that the resistance R4 is 100 Ω and the resistance R5 is 800 Ω.

Each of the switches S1 and S2 includes a relay having contacts in two poles. In such a configuration, there is an operation delay of about two milliseconds or more between the make contact and the break contact. In normal time, if the switch S1 is turned off, the current limiting circuit AF1 operates and current flows into the current limiting circuit AF1 in such a manner as to decrease a potential difference between terminals of the switch S1. Then, at a time point at which the switch S2 is turned on, the current flowing in the current limiting circuit AF1 becomes low and the current does not fuse the fuse of the protector PF2.

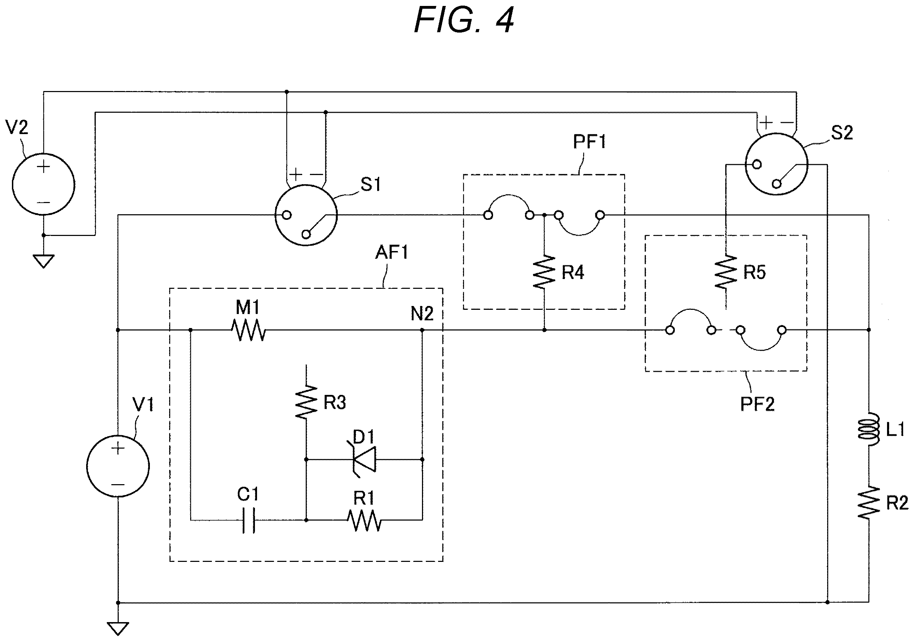

Fig. 4 is a view schematically illustrating a state in which an MOSFET M1 becomes resistance due to a breakdown of the MOSFET M1. Functions of the protectors PF1 and PF2 will be described in detail with reference to Fig. 4. If the switch S1 is switched from being on to off and the switch S2 is switched from being off to on in a state in which the MOSFET M1 is broken, current from the power supply V1 flows into the protectors PF1 and PF2 through the MOSFET M1. The fuses of the protector PF2 is eventually fused by the current from the power supply V1.

If the fuses of the protector PF2 is fused, the current from the power supply V1 flows into the protector PF1 through the resistance R4. The fuses of the protector PF1 is also fused eventually by the current from the power supply V1.

Thus, since the fuses of the protectors PF1 and PF2 are fused in a case where the MOSFET M1 is broken, current does not flow into the switch S1 even if turning on/off of the switch S1 is performed thereafter, whereby no arc is generated between the terminals of the switch S1.

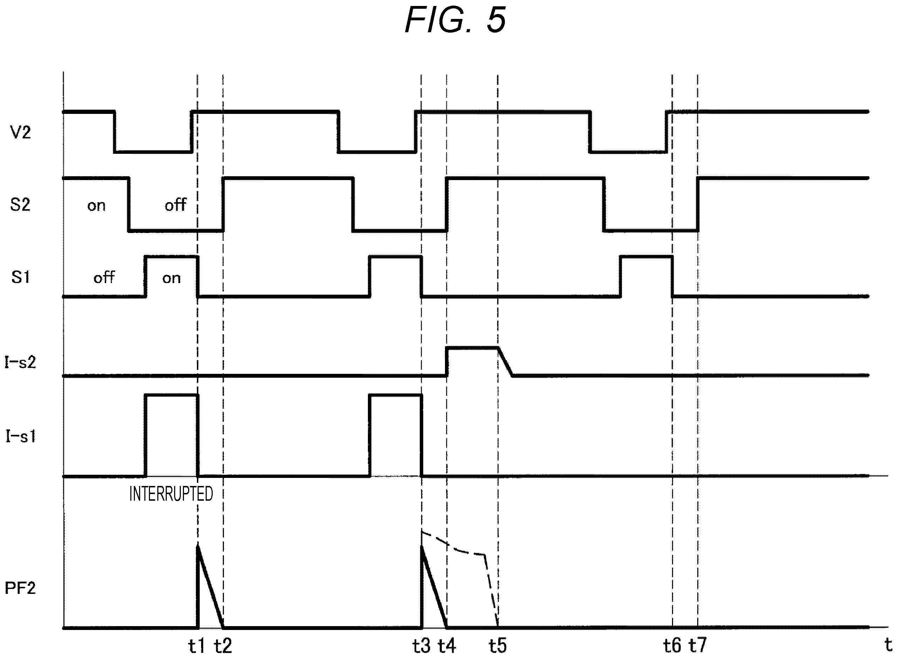

Fig. 5 is a view for describing, with a timing chart, an operation example of the arc suppression device according to the present embodiment illustrated in Fig. 3. V2 indicates switching of the DC power supply V2, S2 indicates switching on/off of the switch S2, and S1 indicates switching on/off of the switch S1. Also, I-s2 indicates a transition of current flowing in the switch S2. Also, I-s1 indicates a transition of current flowing in the switch S1, and PF2 indicates a transition of current flowing in the fuses of the protector PF2.

An operation in normal time will be described. If the switch S1 is turned off at a time point of time t1, the current limiting circuit AF1 operates in such a manner as to decrease the potential difference between the terminals of the switch S1. Thus, although current flows into the protector PF2 for a short period of time if the switch S1 is turned off at the time point of the time t1, the flow of the current in the protector PF2 is eventually stopped since the MOSFET M1 of the current limiting circuit AF1 is turned off as described above. Then, since the current does not flow in the protector PF2 at the time point at which the switch S2 is turned on after switching off of the switch S1, the current does not flow into the switch S2.

Next, an operation of when the MOSFET M1 is broken will be described. If the switch S1 is turned off at a time point of time t3, current usually does not flow into the protector PF2 at a time point of time t4. However, when the MOSFET M1 is broken, current keeps flowing into the fuses of the protector PF2 even after the time t4.

If the switch S2 is turned on at the time t4, the current also flows into the switch S2 through the resistance R5 of the protector PF2. If the current keeps flowing in the fuses of the protector PF2, the fuses of the protector PF2 are fused at a time point of time t5. If the fuses of the protector PF2 are fused, the current does not flow into the switch S2. After fue of the protector PF2 is fused, the current from the power supply V1 flows into the protector PF1 through the resistance R4 and the fuses of the protector PF1 are also fused eventually by the current from the power supply VI, as described above.

Thereafter, even if the switch S1 is turned on again, current does not flow into the resistance R2 through the switch S1 since the fuses of the protector PF1 are fused. Then, even if the switch S1 is turned off at a time point of time t6, the current does not flow into the resistance R2 since the fuses of the protectors PF1 and PF2 are fused, and no arc is generated in the switch S1.

The arc suppression device illustrated in Fig. 3 can prevent generation of arc in interruption of electric power by the switch S1 even if the MOSFET M1 is broken in a case where current flowing from the power supply V1 is high.

### (Modification example)

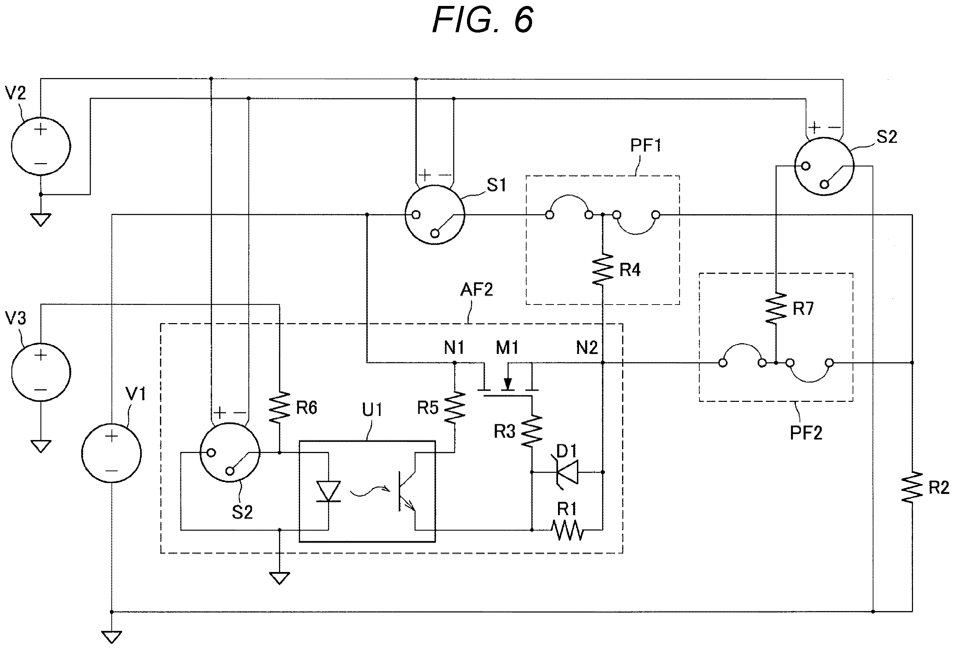

It is also possible to replace a part of the current limiting circuit AF1 illustrated in Fig. 3 with a photocoupler. Fig. 6 is a view for describing a modification example of the arc suppression device according to the embodiment of the present disclosure.

An arc suppression device illustrated in Fig. 6 includes switches S1, S2, and S3 including, for example, SSRs, a current limiting circuit AF2, and protectors PF1 and PF2. A power supply V1 illustrated in Fig. 6 is configured to supply electric power of 400 W. The switch S1 is a make contact and the switches S2 and S3 are break contacts. If the resistance R2 is 10 ohms (Ω), current of 40 amperes flows from the power supply V1.

The current limiting circuit AF2 has a configuration in which a photocoupler U1 is added to the current limiting circuit AF1 illustrated in Fig. 3. Since the switch S2 is a break contact, the switch S2 is turned on if the switch S1 is turned off. If the switch S2 is turned on, current flows from a power supply V3 into a photodiode PD of the photocoupler U1 and the photodiode PD emits light. By the light emission by the photodiode PD, a phototransistor Q1 is turned on. If the phototransistor Q1 is turned on, the current limiting circuit AF2 operates in such a manner as to decrease a potential difference between terminals when the switch S1 is turned off.

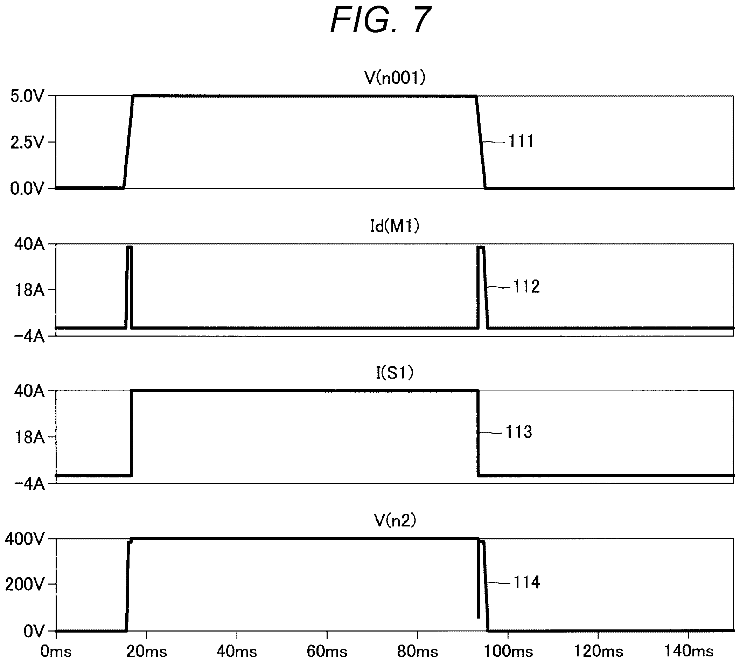

Fig. 7 is a view for describing a temporal transition of voltage and current in the arc suppression device illustrated in Fig. 6. A sign 131 indicates a temporal transition of voltage applied to resistance R2, a sign 132 indicates that of current flowing in a MOSFET M1, a sign 133 indicates that of current flowing in the switch S1, and a sign 134 indicates that of a node N2.

In a case where a photocoupler is provided in the current limiting circuit AF2 as illustrated in Fig. 6, by providing the protectors PF1 and PF2 similarly to the arc suppression device illustrated in Fig. 3, it is also possible to prevent generation of arc in interruption of electric power by the switch S1 even if the MOSFET M1 is broken.

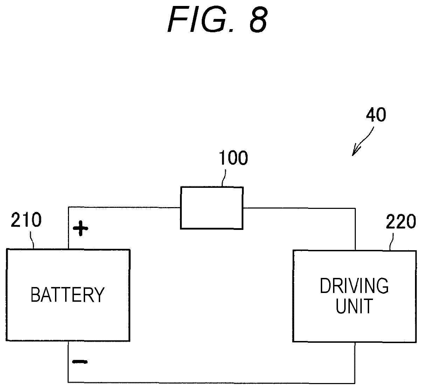

Fig. 8 is a view for describing a functional configuration example of a mobile object 40 including an arc suppression device. For example, the mobile object 40 may be a mobile object such as a gas vehicle in which object gasoline is a power source, or a mobile object such as an electric vehicle, a hybrid vehicle, or an electric motorbike in which object a chargeable/dischargeable battery is a main power source. In Fig. 12, an example of a case where the mobile object 40 includes a battery 210, a driving unit 220 that performs driving by electric power supplied from the battery, and an arc suppression device 100 that suppresses arc in interruption of the electric power from the battery 210 is illustrated. The driving unit 220 may include an equipment such as a wiper, a power window, a light, a car navigation system, or an air conditioner which equipment is included in a vehicle, a device such as a motor which device drives the mobile object 40, or the like.

Then, in the mobile object 40 illustrated in Fig. 8, an arc suppression device 100 is provided in the middle of a path in which DC power is supplied from the battery 210 to the driving unit 220. For example, what having the above-described configuration illustrated in Fig. 3 or Fig. 6 may be used as the arc suppression device 100. The mobile object 40 illustrated in Fig. 8 can safely interrupt DC current since the arc suppression device 100 is provided in the path in which DC power is supplied from the battery 210 to the driving unit 220.

Note that although an example of the mobile object 40 including only one arc suppression device 100 is illustrated in Fig. 8, the present disclosure is not limited to such an example. In other words, a plurality of arc suppression devices 100 may be provided in the middle of the path in which the DC power is supplied. Also, the arc suppression device 100 may be provided not only in the middle of the path in which the DC power is supplied from the battery 210 to the driving unit 220 but also in a different place such as a middle of a path of when the battery 210 is charged with DC power. In the mobile object 40, it is possible to safely charge the battery 210 with the DC power by providing the arc suppression device 100 in the middle of the path of when the battery 210 is charged with the DC power.

### <2. Conclusion>

As described above, according to an embodiment of the present disclosure, an arc suppression device that suppresses generation of arc in interruption of electric power by not performing fusion during supply of electric power from a DC power supply during which relatively high current flows, and by bypassing the current to a fuse in a case of a breakdown of a circuit is provided.

Note that the arc suppression device according to the embodiment of the present disclosure has an effect of suppressing generation of arc specifically in interruption of DC power but may be also used to suppress arc that may be generated in interruption of an AC power supply.

In the above, a preferred embodiment of the present disclosure has been described in detail with reference to the attached drawings. However, the technical scope of the present disclosure is not limited to such an example. It is obvious that those skilled in a technical field of the present disclosure can come to find various modification examples or correction examples within the scope of the claims, and it is understood that these also belong to the technical scope of the present disclosure obviously.

Furthermore, the effect described in the present description is just a description or an example and is not a limitation. That is, a technology according to the present disclosure may have, in addition to the above effect or instead of the above effect, a different effect obvious to those skilled in the art from a description in the present description.

### REFERENCE SIGNS LIST

- AF1, AF2: Current limiting circuit
- PF1, PF2: Protector
- 40: Mobile object
- 100: Arc suppression device
- 210: Battery
- 220: Driving unit

## Claims

1. An arc suppression device comprising:
a current limiting circuit (AF1, AF2) provided in parallel with a breaker (S1) that switches supplying and interrupting of electric power from a power supply (V1) to a load;
a first protector (PF2) that is provided before or after the current limiting circuit (AF1, AF2)and that interrupts current from the power supply if current of a predetermined amount or more flows in the current limiting circuit for a predetermined period or longer; and
a second protector (PF1) that interrupts the current from the power supply after the first protector (PF2) interrupts the current from the power supply,
**characterised in that** the current limiting circuit (AF1, AF2) interrupts its current from the power supply (V1) when the electric power from the power supply is supplied to the load, and interrupts its current from the power supply after the current of the predetermined amount or more generated by a potential difference generated in interruption flows for a period shorter than the predetermined period when the supply of the electric power from the power supply to the load is interrupted.

2. The arc suppression device according to claim 1, wherein in the first protector (PF2) and the second protector (PF1), current is limited by the current limiting circuit (AF1, AF2) when the electric power from the power supply (V1) is supplied to the load through the breaker.

3. The arc suppression device according to claim 1, wherein the current limiting circuit (AF1, AF2) includes a switching element (M1) that becomes an off-state when the electric power from the power supply is supplied to the load and that becomes the off-state after becoming an on-state by a potential difference generated in interruption and letting current generated by the potential difference flow when the supply of the electric power from the power supply to the load is interrupted.

4. The arc suppression device according to claim 3, wherein the current limiting circuit (AF1, AF2) includes a capacitative element (C1) that increases a gate voltage of the switching element (M1) when the supply of the electric power from the power supply (V1) to the load is interrupted.

5. The arc suppression device according to claim 4, wherein the current limiting circuit (AF1, AF2) includes a resistance element (R1) that sets, along with the capacitative element (C1), time of applying voltage to a gate terminal of the switching element (M1).

6. The arc suppression device according to claim 4, wherein the current limiting circuit (AF1, AF2) includes a Zener diode (D1) between a source terminal and a gate terminal of the switching element (M1).

7. The arc suppression device according to claim 3, wherein the current limiting circuit (AF2) further includes a phototransistor (U1) that brings the switching element (M1) into the on-state when the supply of the electric power from the power supply to the load is interrupted.

8. The arc suppression device according to claim 1, wherein each of the first protector (PF2) and the second protector (PF1) includes a fuse, and a heating element that gives heat to the fuse.

9. A mobile object comprising: one or more arc suppression devices (100) according to claim 1.

10. A power supply system (40) comprising:
a battery (210) that supplies direct current power;
a driving unit (220) that performs driving with the direct current power supplied from the battery; and
at least one arc suppression device (100) according to claim 1 provided between the battery and the driving unit.

## Patentansprüche

1. Vorrichtung zur Lichtbogenunterdrückung, umfassend:
eine Strombegrenzungsschaltung (AF1, AF2), die parallel zu einem Leistungsschalter (S1) vorgesehen ist, der ein Zuführen und Unterbrechen von elektrischer Energie aus einer Stromversorgung (V1) zu einer Last schaltet;
einen ersten Schutz (PF2), der vor oder nach der Strombegrenzungsschaltung (AF1, AF2) vorgesehen ist und der Strom aus der Stromversorgung unterbricht, wenn in der Strombegrenzungsschaltung ein Strom einer vorbestimmten Menge oder mehr für einen vorbestimmten Zeitraum oder länger fließt; und
einen zweiten Schutz (PF1), der den Strom aus der Stromversorgung unterbricht, nachdem der erste Schutz (PF2) den Strom aus der Stromversorgung unterbricht,
**dadurch gekennzeichnet, dass**
die Strombegrenzungsschaltung (AF1, AF2) ihren Strom aus der Stromversorgung (V1) unterbricht, wenn der Last elektrische Energie aus der Stromversorgung zugeführt wird, und ihren Strom aus der Stromversorgung unterbricht, nachdem der Strom der vorbestimmten Menge oder mehr, der durch eine bei Unterbrechung erzeugte Potentialdifferenz erzeugt wird, für einen Zeitraum kürzer als der vorbestimmte Zeitraum fließt, wenn die Versorgung der Last mit elektrischer Energie aus der Stromversorgung unterbrochen wird.

2. Vorrichtung zur Lichtbogenunterdrückung nach Anspruch 1,
wobei durch die Strombegrenzungsschaltung (AF1, AF2) ein Strom in dem ersten Schutz (PF2) und dem zweiten Schutz (PF1) begrenzt wird, wenn der Last über den Leistungsschalter elektrische Energie aus der Stromversorgung (V1) zugeführt wird.

3. Vorrichtung zur Lichtbogenunterdrückung nach Anspruch 1,
wobei die Strombegrenzungsschaltung (AF1, AF2) ein Schaltelement (M1) aufweist, das ausgeschaltet wird, wenn der Last elektrische Energie aus der Stromversorgung zugeführt wird, und das ausgeschaltet wird, nachdem es durch eine bei Unterbrechung erzeugte Potentialdifferenz eingeschaltet wird, und einen durch die Potentialdifferenz erzeugten Strom fließen lässt, wenn die Versorgung der Last mit elektrischer Energie aus der Stromversorgung unterbrochen wird.

4. Vorrichtung zur Lichtbogenunterdrückung nach Anspruch 3,
wobei die Strombegrenzungsschaltung (AF1, AF2) ein kapazitives Element (C1) aufweist, das eine Gate-Spannung des Schaltelements (M1) erhöht, wenn die Versorgung der Last mit der elektrischen Energie aus der Stromversorgung (V1) unterbrochen wird.

5. Vorrichtung zur Lichtbogenunterdrückung nach Anspruch 4,
wobei die Strombegrenzungsschaltung (AF1, AF2) ein Widerstandselement (R1) aufweist, das zusammen mit dem kapazitiven Element (C1) eine Zeit zum Anlegen einer Spannung an einen Gate-Anschluss des Schaltelements (M1) einstellt.

6. Vorrichtung zur Lichtbogenunterdrückung nach Anspruch 4,
wobei die Strombegrenzungsschaltung (AF1, AF2) eine Zenerdiode (D1) zwischen einem Source-Anschluss und einem Gate-Anschluss des Schaltelements (M1) aufweist.

7. Vorrichtung zur Lichtbogenunterdrückung nach Anspruch 3,
wobei die Strombegrenzungsschaltung (AF2) ferner einen Fototransistor (U1) aufweist, der das Schaltelement (M1) einschaltet, wenn die Versorgung der Last mit elektrischer Energie aus der Stromversorgung unterbrochen wird.

8. Vorrichtung zur Lichtbogenunterdrückung nach Anspruch 1,
wobei jeder des ersten Schutz (PF2) und des zweiten Schutz (PF1) eine Sicherung und ein Heizelement, das der Sicherung Wärme zuführt, aufweist.

9. Mobiles Objekt, umfassend: eine oder mehrere Vorrichtungen (100) zur Lichtbogenunterdrückung nach Anspruch 1.

10. Stromversorgungssystem (40), umfassend:
eine Batterie (210), die Gleichstrom liefert;
eine Antriebseinheit (220), die mit von der Batterie zugeführtem Gleichstrom betrieben wird; und
mindestens eine Vorrichtung (100) zur Lichtbogenunterdrückung nach Anspruch 1, die zwischen der Batterie und der Ansteuerungseinheit vorgesehen ist.

## Revendications

1. Dispositif de suppression d'arc, comprenant :
un circuit de limitation de courant (AF1, AF2) situé parallèlement à un disjoncteur (S1) qui commute entre la fourniture et l'interruption d'une puissance électrique d'une alimentation (V1) à une charge ;
un premier dispositif de protection (PF2) qui est situé avant ou après le circuit de limitation de courant (AF1, AF2) et qui interrompt un courant de l'alimentation si un courant d'une grandeur prédéterminée ou plus circule dans le circuit de limitation de courant pendant une période prédéterminée ou plus ; et
un second dispositif de protection (PF1) qui interrompt le courant de l'alimentation après que le premier dispositif de protection (PF2) a interrompu le courant de l'alimentation,
**caractérisé en ce que** :
le circuit de limitation de courant (AF1, AF2) interrompt son courant de l'alimentation (V1) quand la puissance électrique de l'alimentation est fournie à la charge, et interrompt son courant de l'alimentation après que le courant de la grandeur prédéterminée ou plus, généré par une différence de potentiel générée pendant une interruption, a circulé pendant une période plus courte que la période prédéterminée quand la fourniture de la puissance électrique de l'alimentation à la charge est interrompue.

2. Dispositif de suppression d'arc selon la revendication 1, dans lequel, dans le premier dispositif de protection (PF2) et le second dispositif de protection (PF1), un courant est limité par le circuit de limitation de courant (AF1, AF2) quand la puissance électrique de l'alimentation (V1) est fournie à la charge par l'intermédiaire du disjoncteur.

3. Dispositif de suppression d'arc selon la revendication 1, dans lequel le circuit de limitation de courant (AF1, AF2) inclut un élément de commutation (M1) qui passe dans un état ouvert quand la puissance électrique de l'alimentation est fournie à la charge et qui passe dans l'état ouvert après être passé dans un état fermé par une différence de potentiel générée pendant une interruption et avoir laissé circuler un courant généré par la différence de potentiel quand la fourniture de la puissance électrique de l'alimentation à la charge est interrompue.

4. Dispositif de suppression d'arc selon la revendication 3, dans lequel le circuit de limitation de courant (AF1, AF2) inclut un élément capacitif (C1) qui augmente une tension de grille de l'élément de commutation (M1) quand la fourniture de la puissance électrique de l'alimentation (V1) à la charge est interrompue.

5. Dispositif de suppression d'arc selon la revendication 4, dans lequel le circuit de limitation de courant (AF1, AF2) inclut un élément résistif (R1) qui fixe, conjointement avec l'élément capacitif (C1), un temps d'application d'une tension à une borne de grille de l'élément de commutation (M1).

6. Dispositif de suppression d'arc selon la revendication 4, dans lequel le circuit de limitation de courant (AF1, AF2) inclut une diode Zener (D1) entre une borne de source et une borne de grille de l'élément de commutation (M1).

7. Dispositif de suppression d'arc selon la revendication 3, dans lequel le circuit de limitation de courant (AF2) inclut en outre un phototransistor (U1) qui met l'élément de commutation (M1) dans l'état fermé quand la fourniture de la puissance électrique de l'alimentation à la charge est interrompue.

8. Dispositif de suppression d'arc selon la revendication 1, dans lequel le premier dispositif de protection (PF2) et le second dispositif de protection (PF1) incluent chacun un fusible et un élément chauffant qui donne de la chaleur au fusible.

9. Objet mobile comprenant : un ou plusieurs dispositifs de suppression d'arc (100) selon la revendication 1.

10. Système d'alimentation (40), comprenant :
une batterie (210) qui fournit une puissance en courant continu ;
une unité d'attaque (220) qui effectue une attaque avec la puissance en courant continu fournie par la batterie ; et
au moins un dispositif de suppression d'arc (100) selon la revendication 1 situé entre la batterie et l'unité d'attaque.
